# EUROPEAN PATENT SPECIFICATION

(11) **EP 3 945 445 B1**
(45) Date of publication and mention of the grant of the patent: **28.08.2024**
(21) Application number: 20188255.2
(22) Date of filing: 28.07.2020
(51) Int. Cl.: G06F 21/83, G06F 21/56, G06F 3/04886

(54) **KEYBOARD CONTROLLER WITH INTEGRATED RISK ENGINE**
TASTATURSTEUERUNG MIT INTEGRIERTEM RISIKOMOTOR
CONTRÔLEUR DE CLAVIER À MOTEUR DE RISQUE INTÉGRÉ

(43) Date of publication of application: 02.02.2022
(73) Proprietor: BlackBerry Limited, Waterloo, Ontario N2K 0A7 (CA)
(72) Inventor: WHITE, Johnathan George, Waterloo, Ontario N2K 0A7 (CA)
(74) Representative: Murgitroyd & Company

(56) References cited:
- US-A1- 2006 101 128
- US-A1- 2016 314 321
- US-A1- 2018 129 413

## Description

### FIELD

The present application generally relates to data security, and more particularly, to a keyboard controller with an integrated risk engine that is configured to identify potential data security issues to enhance data security within a computing device environment.

### BACKGROUND

As the use of computing devices becomes more ubiquitous in all facets of life users are increasingly turning to mobile computing devices for both personal and business activities. Such activities often involve the creation and/or saving of various types of files, such as, for example, a sports fan taking a photo with their smartphone, or a banker downloading a financial document to their tablet PC. In some cases, files of a sensitive or confidential nature (both personal and business) are created and/or saved. In some devices, it is possible to encrypt sensitive files stored on the device.

These computing devices become repositories for data but also provide a user access point of interface to data repositories that are stored off-device, for example on remote networks or within a cloud environment. As these computing devices also have integrated communication capabilities it is not uncommon for a user of the device to have the capacity to access data through their computing device and then transmit that data, or portions thereof, to one or more other users who can access, process or relay that data using their own computing devices. It is therefore a constant challenge in today's networked environment to ensure data security is not compromised through inadvertent or purposeful transmission of that data.

To address these challenges, it is known to create secure operating environments, for example through the use of firewalls and the like, to curtail the access to, or transmission of data, when outside a particular computing environment. US 2016/314321 A1 relates to a system for monitoring an information leakage of a smartphone, which includes a server and a smartphone.
US 2006/101128 A1 relates to protection of sensitive keystroke data by preventing keystroke loggers harvesting sensitive keystrokes at a kernel level, at a shell level or at an application level.
US 2018/0129413 A1 relates to a biometric analyser including a biometric generator receiving user input, deriving a biometric template of the user, and subsequently when the user tries to access a system using a keyboard, the system, identifies the user based on his biometric template.
This can be achieved for example through use of security privileges on a user or domain level. Specific destinations or communication paths can be whitelisted to allow transmission of data or blacklisted to restrict transmission of data. Oftentimes, these approaches operate by intercepting communications transmissions *en route* from a user device to another user device, i.e. a message is already created and transmitted. This approach is also particularly useful when applying constraints on user access to data through their computing device to situations when they are in a controlled computing environment - for example within a corporate domain.

Within a mobile computing environment, the challenges are increased, as the computing devices are by their very nature mobile and may be used in different networking environments where centralized control of data access, be that for local viewing and processing or for off-device communication may be challenging. This becomes even more difficult in the environment where a plurality of different applications, each provided by different vendors, can be independently installed on a computing device and then used by a user to access data and/ or to create and transmit messages off-device. It is exacerbated by the fact that many organizations facilitate and indeed actively encourage the concept of Bring Your Own Device, BYOD, whereby a user can use their own personal computing device within a corporate environment. This device will typically, in today's mobile environment, operate under a proprietary operating system such as the IOS^{™} or ANDROID^{™} operating system. With each of these operating systems having their own dedicated APPS that can be installed and operated on the mobile computing device, the issues of data security control become greater as the enterprise control over the operation and use of devices is diminished.

Some of the issues associated with the control and usage of devices are issues relating to possible data breach through actions of persons of unscrupulous nature accessing or taking control of the operation of a device or the data that is accessed through that device. In addition to these problems there is also the possibility of inadvertent leakage of data. Mobile computing devices are used in a variety of different environments and times, and it is not unusual for a user to either inadvertently misdirect a message to an unintended recipient or include data in a message that was never intended to be transmitted.

There therefore continues to be problems associated with the use of mobile communications in the controlled access to and dissemination of data.

### SUMMARY

These and other problems are addressed by a keyboard controller and a computing device as detailed in the claims that follow.

### BRIEF DESCRIPTION OF THE DRAWINGS

Reference will now be made, by way of example, to the accompanying drawings which show example embodiments of the present application, and in which:
Figure 1 illustrates, in block diagram form, a computing device within a networked architecture in accordance with the present teaching;
Figure 2A is a schematic in block form of a keyboard controller in accordance with the present teaching.
Figure 2B is a schematic process flow that may be employed for operation of a keyboard controller in accordance with the present teaching.
Figure 3A and Figure 3B are representations of a computing device user interface with a rendered keyboard provided by a keyboard controller in accordance with the present teaching.
Figure 4A and Figure 4B are schematic representations of rendered images on a graphical user interface as provided by a keyboard controller in accordance with the present teaching.
Figure 5A and Figure 5B are schematic representations of an exemplary configuration interface rendered on a graphical user interface as provided by a keyboard controller in accordance with the present teaching
Figure 6A and Figure 6B are schematic representations of rendered images on a graphical user interface as provided by a keyboard controller in accordance with the present teaching.
Figure 7A and Figure 7B are schematic representations of rendered images on a graphical user interface as provided by a keyboard controller in accordance with the present teaching.

Similar reference numerals may have been used in different figures to denote similar components.

### DESCRIPTION OF EXAMPLE EMBODIMENTS

To address these problems the present inventor has identified that irrespective of the origin of the software applications that are executing on a computing device, or the nature of the operating system that is providing the underlying functionality of the computing device, that a keyboard provides a common user input interface to enable a user engage and interface with the functionality of the computing device- be that hardware or software enabled. Traditionally a keyboard was provided as a physical hardware component with keys, arranged for example in a QWERTY configuration, that facilitated user engagement with the computing device that was physically coupled to the keyboard. A software application in the form of a keyboard driver installed on the computing device was configured to translate and communicate the keystrokes input from the keyboard to the applications or operating systems of the computing device to which the keyboard was coupled. As keyboards first became integrated into the computing device and then more recently were embodied as virtual display components that were accessed through a touchscreen interface, the basic functionality of the keyboard controller was retained but additional functionality such as the rendering and display of the keyboard on the display of the device was incorporated. In this latter environment the keyboard controller functionally also extended to interpreting touch screen contact on the display and correlating that with an associated character on the displayed character. Common to all three implementations is however a processing of a raw input event and relaying a character associated with that event to an appropriate destination within the computing device-be that the application being currently interfaced with or an element of the operating system upon which that application is executing.

With this understanding, the present inventor has identified that by incorporating a risk engine into the functionality of the keyboard controller that it is possible to use the processing of the raw input event as a trigger for the risk engine to effect a risk analysis of the current operation of the device. The risk engine analysis may be a processing of the characters concurrent with their relay to other destinations within the computing device. In a first aspect, there is provided a keyboard controller configured to be executed on a computing device having at least one other application executing thereon, the controller comprising an input interface to receive signals input using keys of the keyboard, a processing component configured to translate the received signals into one or more characters, and an output interface configured to relay the one or more characters to the at least one other application, wherein the keyboard controller further comprises an integrated risk engine in communication with each of the processing component and the output interface, the risk engine being triggered by active use of the keyboard controller.

In one arrangement the triggering of the risk engine effects a processing of the one or more characters to identify one more security risks and an actioning of a security response output of the keyboard controller in response to identifying the one or more security risks.

In another arrangement the triggering of the risk engine effects a risk analysis of the current operation of the device to identify malware or other nefarious activity on the device, identification of that activity effecting a displayed response on a rendered keyboard on the device.

In another aspect the present application provides a computing device that includes a processor; a memory; at least one application stored in the memory and executable by the processor of the computing device, the device further including a keyboard controller application stored in the memory and containing processor-executable instructions to receive signals input using keys of a keyboard of the device, to translate the received signals into one or more characters, and to relay the one or more characters to the at least one application, wherein the processor-executable instructions are further configured to process the received characters to identify one more security risks and to action a security response output of the keyboard controller in response to identifying the one or more security risks.

In another aspect, the present application provides a keyboard controller application which when executed on a computing device is configured to effect a computer-implemented method of analysing risk in operation of the computing device, the method comprising translating received signals input using keys of a keyboard of the device into one or more characters, processing the received characters to identify one more security risks and to action a security response output of the keyboard controller in response to identifying the one or more security risks and to relay the one or more characters to at least one other application executing on the computing device.

In yet a further aspect, the present application describes a computer-readable storage medium storing processor-readable instructions that, when executed, configure a processor to perform any of the methods described herein. The computer-readable storage medium may be non-transitory. Also described in the present application is a computing device comprising: a processor, memory, and an application containing processor-executable instructions that, when executed, cause the processor to carry out at least one of the methods described herein. In this respect, the term processor is intended to include all types of processing circuits or chips capable of executing program instructions.

Other aspects and features of the present application will be understood by those of ordinary skill in the art from a review of the following description of examples in conjunction with the accompanying figures.

In the present application, the terms "about", "approximately", and "substantially" are meant to cover variations that may exist in the upper and lower limits of the ranges of values, such as variations in properties, parameters, and dimensions. In a non-limiting example, the terms "about", "approximately", and "substantially" may mean plus or minus 10 percent or less.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ... or..." is intended to cover any one or more of the listed elements, including any one of the listed elements alone, any sub-combination, or all of the elements, without necessarily excluding any additional elements, and without necessarily requiring all of the elements.

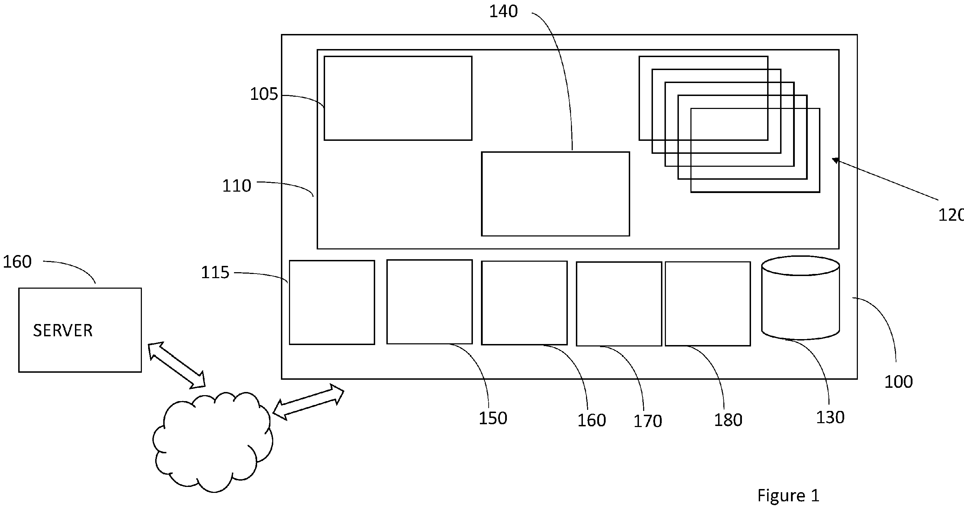

Reference is first made to Figure 1, which illustrates in schematic form components of an example computing device 100 in accordance with the present teaching. The device 100 includes a memory 110 that stores an operating system 105 and applications 120. The operating system 105 and applications 120 contain processor-executable instructions that, when executed by the processor 115, configure the processor 115 to carry out the operations described. In the scenario where the computing device is a mobile computing device such as a smartphone, tablet, or the like, the Operating System 105 may be any suitable operating system, such as the Android^{™} or IOS^{™} operating system, for example. The present application is not limited to any particular OS provided that the OS interacts with the device hardware including the processor 115 on a basic level, transmitting user commands into processing commands in a manner that the hardware can interpret. The OS acts as a platform for all other applications 120 on the device. In the context of a smartphone, the applications 120 may be proprietary applications provided by the same provider as the OS, or can be third party applications that are downloaded and executed on the device from for example an APP store such as the Android^{™} PlayStore^{™}.

These applications are stored in the memory 110 of the device and are executable by the processor 115 to enable specific functionality of the device. Examples of this functionality include messaging functionality provided by applications such as SMS messaging applications, peer-to-peer messaging applications, email messaging applications and the like. The applications may include fulfill one or more social media functions such as those provided by Linkedln^{™}, Instagram^{™}, Facebook^{™} and the like. Other applications include browser applications such as those provided by Apple^{™} and Google^{™}. Further functionality of the device 100 can be provided by hardware components such as: an accelerometer 160 which can, for example, provide information on the orientation of the device 100; a GPS module 170 that can provide location information; and of course a communication module 180 that allows the device effect off-device communications.

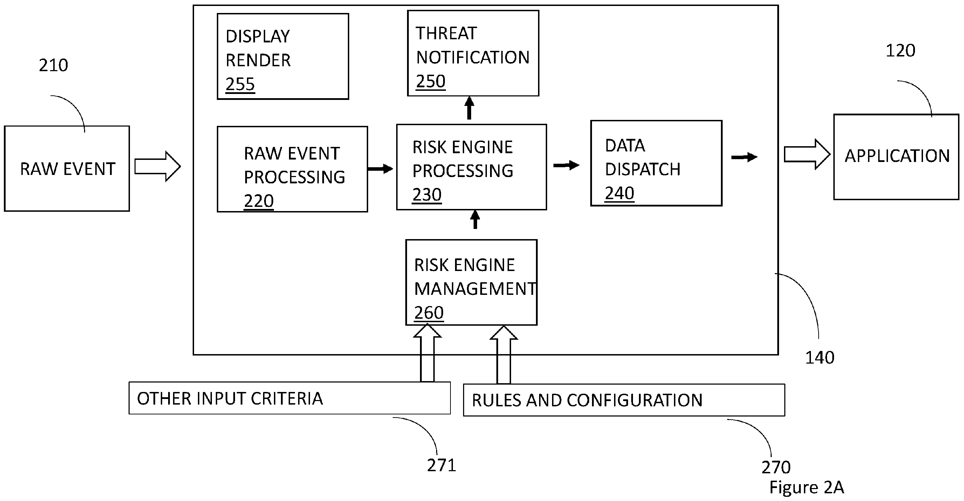

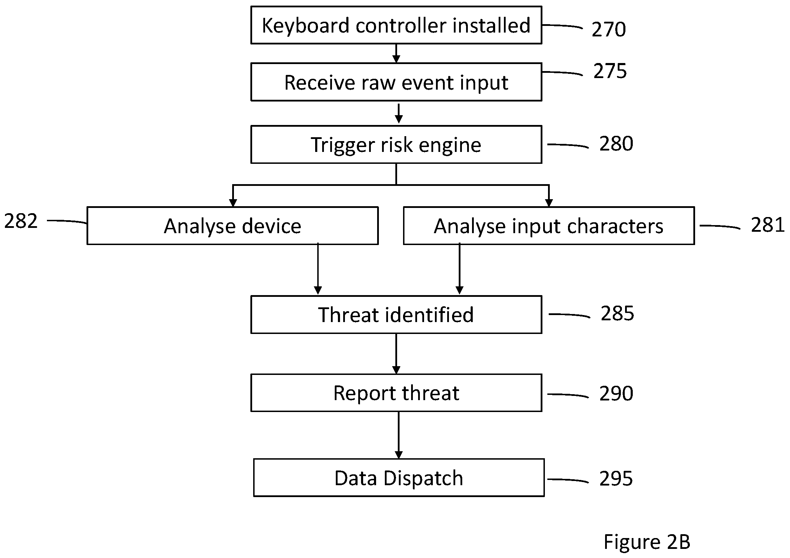

The device further includes a keyboard controller application 140 stored in the memory 110 and containing processor-executable instructions to receive signals input, the raw event 210 of Figure 2, using keys of a keyboard of the device, to translate the received signals into one or more characters, and to relay the one or more characters to a nominated one of the applications 120.

The keyboard controller application per the present teaching is installed onto the device 100 and then provides an interface between user input to the device 100 and a nominated one of the applications 120. Once installed, the keyboard controller application can be configured to be selected as the default application which is started automatically whenever any other application that is launched or is executed within the device needs to interact with the keyboard. In this regard, the person of skill will appreciate that operating system platforms provide mechanisms to allow a default keyboard to be specified and this mechanism can be a 3^{rd} party keyboard that is downloaded and installed on the device. In a preferred implementation of a keyboard controller application per the present teaching, the keyboard controller application would, on installation and setup on a device, configure the device to effect selection of that keyboard controller application as the default selected keyboard interface executing on the device.

In one example the keyboard is implemented using software development kit, SDK, functionality that allows the creation of specific software applications for execution on a specific OS. Once installed, the keyboard controller creates a user input interface to the device. Given the fact that the keyboard controller provides a common user input interface to the device and from at least the user experience perspective it is launched automatically on starting the device and runs in the background irrespective of actual user interface with the device. In this way, any user interaction that requires a keyboard interface will cause the keyboard controller application 140 to execute.

The device 100 further comprises a display 150. In the context of a smartphone, this display will typically incorporate touchscreen technology and the device 100 will be configured to effect generation of a virtual keyboard on the display. A user will interact with the virtual keyboard to input one or more desired characters, these characters being subsequently displayed with a rendered view of the active application executing on the device 100.

The one or more applications 120 may also be used to access data that is stored within a datastore 130 of the device. This data may be of a variety of data types such as documents, images, and the like. The data may be provided in an encrypted or decrypted form.

Figure 2A and 2B shows more detail, again in schematic form, of specific functionality and modes of operation associated with the keyboard controller 140 per the present teaching. Once installed (Step 270) onto the device 100, the keyboard controller is preferably configured to become the default interface application for the receipt and processing of raw input events 210 received from a keyboard. As referenced above, for the present purposes it will be assumed that this keyboard is a virtual keyboard which is rendered on the touch screen display 150 in response to activation of a display render module 255 of the keyboard controller application 140. In such a scenario, the raw input events 210 are electrical signals generated in response to, for example, user touch of capacitive elements provided as part of the touch screen technology display 150. It will be appreciated however that a keyboard controller application per the present teaching can be installed and execute on a computing device that includes a physical keyboard- be that integrated into the device itself or provided as a secondary peripheral device that interfaces through either wired or wireless communication protocols with the device. In all implementations however the shared functionality of being the application that initially receives the raw event 210 input from the keyboard and processes that event to pass it through to the called application is the same. This raw event 210 comprises one or more electrical signals that are generated in response to user interaction with keys of a keyboard of a device.

The raw event 210 is received (Step 275) and is passed to a raw event processing module 220 where these input signals are the converted to corresponding characters, as will be known by those of ordinary skill. In a conventional controller the identified characters would then be passed to a data dispatch module 240 which would identify the target application 120 to which the characters were intended to be input to and would effect a dispatch of those characters to that application 120.

The controller 120 of the present teaching differs from the conventional controllers in that it incorporates a risk engine 230 which is also triggered or activated in response to the receipt of the raw event (Step 280). The functionality of the risk engine can vary dependent on the configuration settings which can be controlled through a risk management engine 260. As the risk engine 230 is active during periods when the keyboard controller is active, and the keyboard controller is active during user interaction with the device, it is possible to use the risk engine to provide a threat evaluation before other applications that are executing on the device are interfaced with. This threat evaluation can be performed in response to receipt of received raw events resultant from user interaction with keys of the keyboard, in receipt of inputs regarding executing applications on the device, receipt of inputs from other hardware components of the device, or indeed a combination of multiple factors. In this way, it is possible to provide different types of risk analysis during use of the device as sensed by the keyboard controller.

Given that the keyboard controller provides a first interface layer to the device, in one aspect of the present teaching, the risk engine may be configured to analyze the device operation (Step 282) to identify one or more device exploitation threats. These could for example be the existence of malware or other malicious applications executing on the device. Other device exploitation activities could be for example the identification of indicia associated with jailbreak actions on the device. Other activities include attempts to modify the underling operating system. Further activities that could be provided under this type of analysis of the device are activities associated with user to determine if the current user is actually the authorized used of the device. Such an operation could be effected for example by identifying the applications being currently called by the device and assessing whether they match predetermined patterns of usage- be that time of day, sequence of access etc.

In another aspect of operation, the risk engine can be configured to analyze the input characters being received into the keyboard controller (Step 281). This analysis can again be configured through one or more rules or configuration settings and can for example be done on a per character basis, a sequence of characters, or a context of use of characters. This analysis can be effected using pattern matching, look up tables, the use of machine learning or artificial intelligence processing or the like

In either aspect, once a threat is identified (Step 285), the threat can be reported (290) depending on the nature of the threat and the associated rules for dealing with that specific threat type. For example, functionality of the device can be temporarily suspended by, for example, limiting the entry of text into one or more target applications. In other aspects, the controller can be configured to effect generation of a warning for the user of the perceived identified threat. In other aspects, the threat can be reported for audit purposes or the like. This could be done without on-device functionality varying or in combination with constraining functionality/ displaying warnings etc. (Step 295).

It will be appreciated that by providing a risk engine which is configured to effect risk analysis on receipt of a raw event into the keyboard controller that the present teaching provides risk engine processing of the identified characters into the functionality of the keyboard controller 140. In this way it is possible to process the raw input event before it is relayed to other destinations within the computing device. The risk engine 230 is in communication with each of the raw event processing module 220 or component and the data dispatch module 240 or output interface. The risk engine is configured to process the one or more characters to identify one more security risks and to action a security response output through a threat notification module 250 of the keyboard controller in response to identifying the one or more security risks.

The risk engine 230 is configured to parse the input characters and to identify risk based on those characters and the context of their input. The identification of the one or more risks can be based on an analysis of the one or more characters in accordance with defined rules and configuration parameters of the risk engine. These rules and configuration parameters may provide for local processing of the one or more characters. They may also trigger communication by the risk engine on the computing devices with processing components on remote networked devices.

The actioned security response output provided by the threat notification module 250 may comprise one or more actions dependent on the identified one or more security risks. For example, a first action could be the generating of a display message on the computing device advising of a potential warning. A second action could be actioning a delay in the relay the one or more characters to the at least one other application. A third action could be the triggering of a requirement for a user confirmation of intent prior to enabling further functionality of one or more components of the device. A fourth action could be a reporting of the security risk off-device, for example to a third party. These and other actions could be effected in combination or independently of one another.

As referenced above, the risk engine may be configured to input the one or more characters into a machine learning algorithm to effect a processing of the characters to identify one or more security risk. In other aspect the risk engine may effect a comparison of the one or more characters against other characters within a look-up table, through the use of regular expression matching and the like. In summary, it is not intended to limit the type of risk engine analysis that can be performed to any one specific functional specification.

More than one characteristic of the one or more characters may be factored into the determination that there is a potential risk. For example, the risk engine 230 may be configured to analyse the characters input using the keys of the keyboard in association with the application 120 being interfaced. In addition the geographical location of the device could be identified. Using these combination of factors, the risk engine can be configured to trigger a higher risk assessment when it is identified that the application 120 being accessed is classified as a private or personal application - such as a personal email account application- and the location of the device is within a corporate or business domain. On making this determination the risk engine may for example be configured to generate a threat notification that a non-corporate messaging application is being accessed. In the event that that usage does not correspond to corporate security configuration settings, the risk engine may be configured to effect a shut down of that communication or action other security outputs. It will be appreciated that the rules and configuration settings that are employed for any one instance of risk analysis can be different for other instances of risk analysis. By embedding the functionality of the risk engine into the keyboard controller application it is possible to dynamically modify the performance and activity of the risk engine depending on one or more input characteristics. For example, the risk engine may be configured to receive input data as other input criteria 271. This could for example be from other functional components of the device such as the accelerometer 160 or GPS module 170, or indeed form the other applications 120 executing on the device

An example of character analysis in determination of risk may be the entry of keywords such as "attachment" or the like which indicate that the application being interfaced with is a messaging application and that the user is intending on adding an attachment to that message. Such an attachment may be a data element within the datastore 130 and the risk engine may be configured to determine whether the risk profile associated with the particular message allows attachments of particular types or sizes.

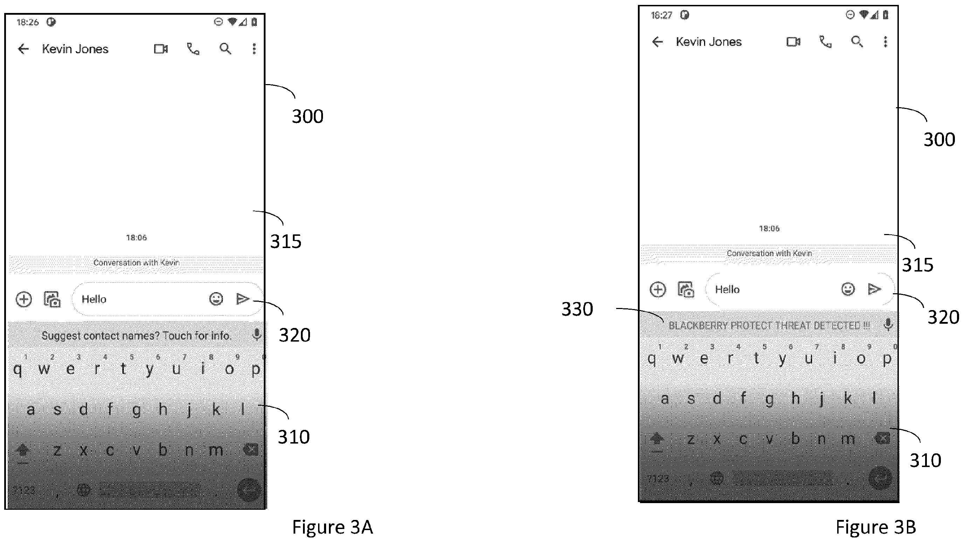

As mentioned above, given that the keyboard controller provides a first interface layer to the device, in one aspect of the present teaching, the risk engine may be configured to identify malware or other malicious applications executing on the device and then to prompt the user of the existence of those application through a display message rendered on the display of the device. Figure 3A and Figure 3B show two screen shots of an example of how this may be achieved by analyzing device operation and configuration settings against a defined set of properties.

In Figure 3A, a user is interfacing with a messaging application that is executing on the device 300. A virtual keyboard 310 is displayed on a touchscreen 315 of the device. The keyboard is in the form of a conventional QWERTY style keyboard, which in the example of the keyboard controller 140 being configured to render the virtual keyboard 310 is effected using the display render module 255 The messaging application provides a display box 320 within which characters associated with the input keys are displayed. In this example the message is directed to a "KEVIN JONES" and the input message is "HELLO".

During user interface with the application the risk engine is, in this example, configured to parse the executing applications on the device. In this example, the risk engine identifies that there is a malware application present on the device and the threat notification module 250 is configured to effect a rendered display on the virtual keyboard of a threat notification message 330, in this instance "BLACKBERRY PROTECT THREAT DETECTED!!!". It will be appreciated that the nature and form of the threat notification may vary.

Advantageously this identification and notification of the threat has been communicated to the user of the device during the user interface with another application, it is not been necessary for the use to trigger execution of dedicated malware detection tools, as would be conventionally required. It will be appreciated that as the graphical form of the keyboard displayed is controlled by the controller and hence its functionality represents enhanced functionality of a conventional keyboard.

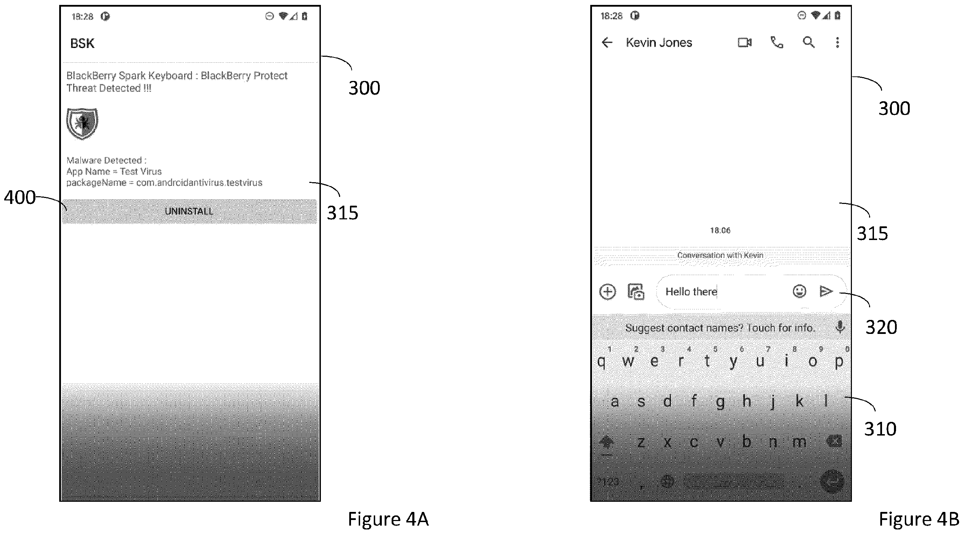

For example, having communicated the identified threat to the user, the keyboard controller may be configured to enable user interaction with the displayed threat message to facilitate user migration to a secondary application which facilitates the removal of the identified threat. Figure 4A shows an example screen shot where, responsive to a user touching the displayed threat message 330 of Figure 3A, the device through action of the keyboard controller, is configured to migrate to a malware detection tool application where the user can then effect a removal of the identified threat through an uninstall process 400. In this example the terms "BlackBerry Spark Keyboard" and "BlackBerry Protect" should be considered as mere labels for the name of the keyboard that is generated by the keyboard controller and the type of risk engine that is being utilized. No inference as to functionality or otherwise should be attributed through use of these names.

Having effected the removal, the user can then return to the original messaging application and continue the message creation- Figure 4B. It is evident that this removal of the identified malware is an example of a mobile threat solution that is integrated per the present teaching into the functionality of a keyboard interface. The specifics of how the mobile threat analysis is effected may vary but can include for example the use of artificial intelligence to block malware infections, prevent URL phishing attacks and provide application integrity checking.

In this way the risk engine is configured to scan and validate applications executing on the device to determine if there is malicious malware and greyware within them prior to pushing applications to devices or users trying to access information while malware is on the device. As the risk engine is integrated into the functionality of the keyboard controller, its usage it coincident with, and triggered by, usage of the keyboard of the device. In this way the activation of the risk engine and its associated processing of activity on the device is triggered by the user interaction with the device through the keyboard of the device. It will be appreciated that this example sequence demonstrates a use case where the device analysis (Step 282 of Figure 2A) is performed prior to any analysis of input characters (Step 281 of Figure 2A). It will be understood however that the sequence described is not intended to limit and operations relating to device and/or character analysis can be done in different sequences. Indeed one type of risk analysis can be in certain scenarios dispensed with depending on the rules and configurations that are currently being used in the risk engine. This dynamic functionality and possible variation in types of risk threat analysis is particularly advantageous in the context of the present teaching.

It will be appreciated from as the keyboard provides a primary user interface unit for any computing task that is performed by the computing device that the incorporation or integration of a risk engine into active usage of the keyboard controller facilitates additional security analysis and subsequent possible data loss or data integrity compromise. This can be configured through suitable configuration of the risk engine through one or more policies or rules - such as the policy and rules 270 that can be input into the risk engine management engine 260. These rules and configuration policies can be periodically updated or managed dependent on the nature of control of the computing device. For example, in the event that the device is associated with a user that is authorized to use that device within a set of corporate security policies, the rules and configuration policy can be centrally managed and rolled out periodically from a central enterprise management portal. In other circumstances where the device is personally used, the rules and policies can be deployed as part of an application update associated with the origin of the application. In further scenarios, the keyboard controller may itself provide a user interface where a user of the device can view and, depending on security settings, update the rules and configuration settings that are deployed by the risk engine.

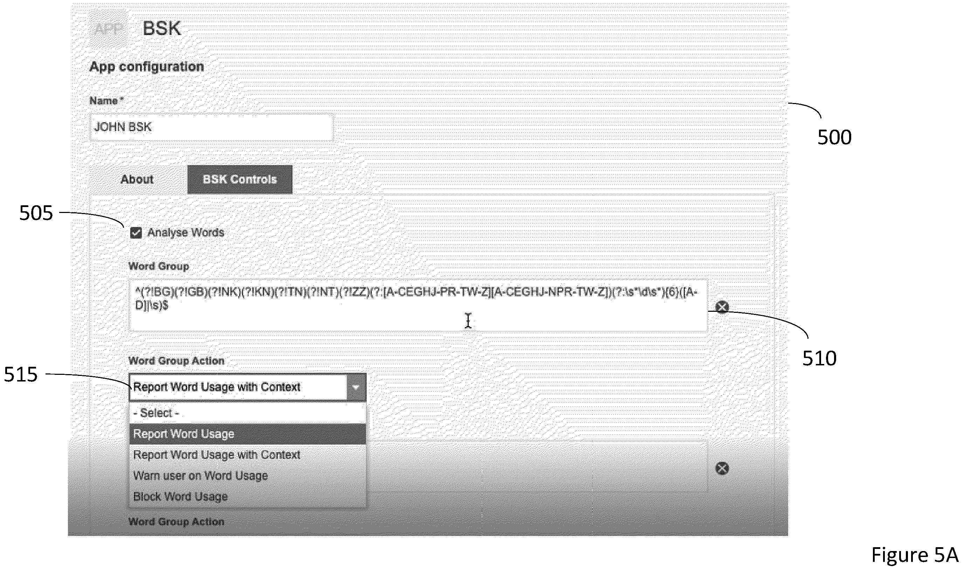

Figure 5A is a screen shot of an exemplary user interface 500 whereby a user can view the policies and rules being applied by the risk engine. In this example the risk engine is configured to analyze input characters on a word by word basis - box 505- and to parse input words against a defined word group- identified in box 510. On confirming that an input word matches the defined criteria, the risk engine in this scenario is configured to report on that word usage- the selected reporting action identified in box 515. Other non-limiting examples are simply reporting of that word usage- to a local or a remote audit tool- the prompting of the user of usage of a rule that meets a policy criterion or the actual blocking of that word. It will be appreciated that all of these actions can be further constrained by other device parameters such as device location, within a predefined domain or outside a predefined domain- the time of usage etc. These rules and policies are particularly useful in applying risk analysis profiling and reporting on data loss protection factors. They can also be useful in providing user authentication analysis and the like. For example, the controller can be configured to effect a storage of user interaction with the device through usage of the controller. This can for example be effected by having the controller configured to monitor a user interaction with the device through usage of the controller to generate a user profile for that user. This monitored usage of the computing device can then comprise comparing current usage with the generated user profile to identify discrepancies and identify those as potential threats which can be reported on.

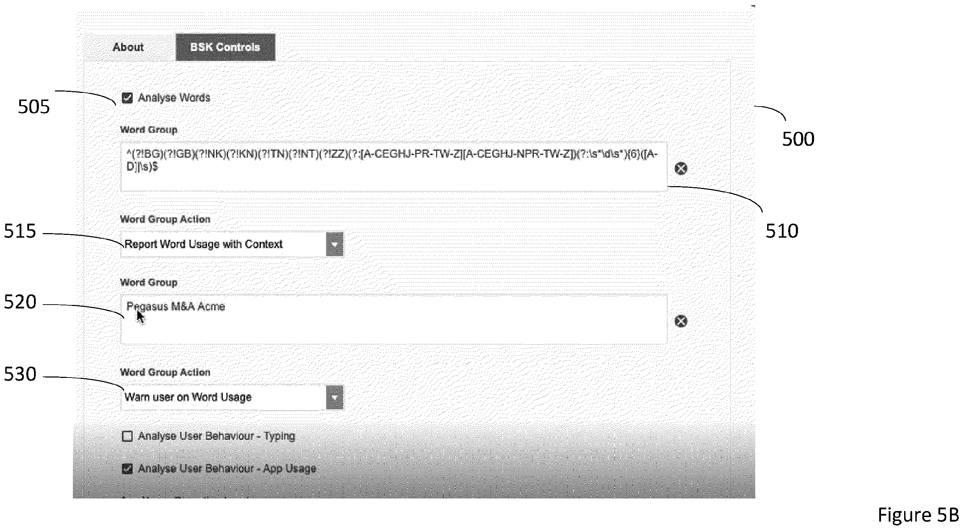

This user interface may be used to define a plurality of sets of word types or actual words. In the example of Figure 5A the policy defines in the box 510 is a policy defined by a word or character type- the string defines a type of set of characters used in combination. Concurrently with defining this string, it is possible to also define specific words which are used to define particular risk criteria. For example in Figure 5B, a set of specific words "PEGASUS M&A ACME" are defined in a second word group box 520. The action on identifying these within a set of characters that are being processed by the keyboard controller can be different to the actions for the word string of box 510. Specifically this example demonstrates that the word group action that will be triggered by the threat notification module 250, is a warn user on word usage- box 530.

The periodic update of the rules and the policy control of actions which may happen when policy trigger occurs can be configured to be periodically updated from the management server 160. The same management server can be used to deploy enterprise wide rules and policies simultaneously to a plurality of different computing devices. As was referenced in Figure 1, a device including a keyboard controller application per the present teaching is desirably in communication with an external server 160. In addition to providing periodic updates to the rules and configurations settings of the keyboard controller, the server 130 can be configured to receive usage logs from one or more connected or associated devices that are each incorporating a keyboard controller per the present teaching. Such aggregation of data from a plurality of devices can be used to effect statistical reporting for security across a larger domain. This can then be used to effect an update of the rules and configuration settings to effect a mitigation of identified possible risk.

This enterprise wide application of group policies to include specific warnings and / or to prompt the user that what they are trying to do may present a risk can be particularly advantageous in certain business environments. For example, by parsing input characters on a word basis can be used to check for specific terms and expressions which are user or group specific, or time specific. As these policies and actions can be updated in over the air updates it is possible to quickly change rules to reflect that certain items are only relevant to flag/record/block when for example a company is in a quiet period before reporting their results, or until a project like a new film is released. It will be appreciated that activation of certain rules and configuration settings may require interface with other executing components on the device such as internal clocks, the GPS module or identified applications 120 which are not to be used/usage is to be controlled.

Depending on the specifics of the rules it is also possible to parse input based a multi-word contextual basis. It will be appreciated that as the risk engine that is an integral feature component of the keyboard controller has visibility to the sequence of characters as they are input that it can be configured to identify contextual usage of words as opposed to their strict dictionary definition. As it can parse each character as it is input to the device it can refresh the risk analysis determination based on processing a plurality of input words provided in a sentence. In this way the risk engine may be configured not only to process based on terms and expressions but also to process based on an analysis of sentences entered and determining the classification of the data from sentence level analysis. For example, in this way the risk engine may be configured to determine if a sentence which references both apple and blackberry references ingredients from a fruit pie recipe or is instead a reference to two corporate entities - Apple^{™} and BlackBerry^{™}. It will be appreciated that a word level only analysis could not provide this level of contextual information.

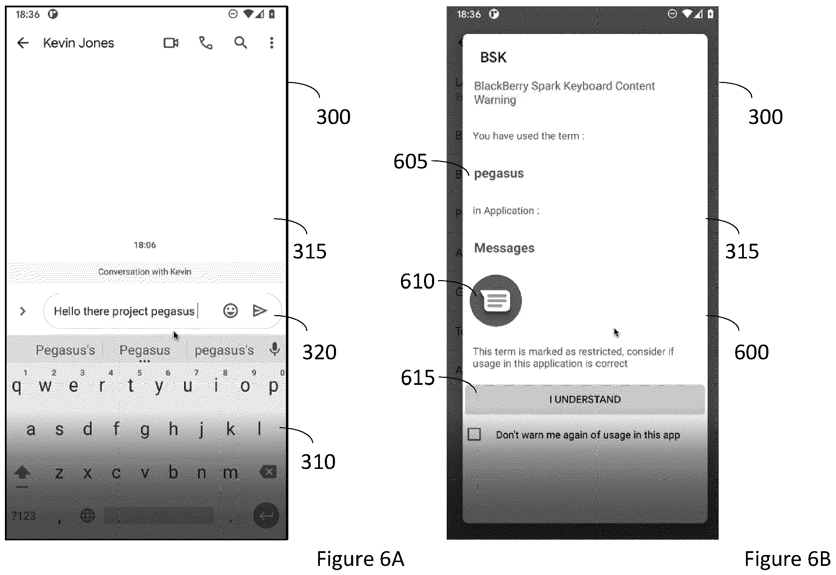

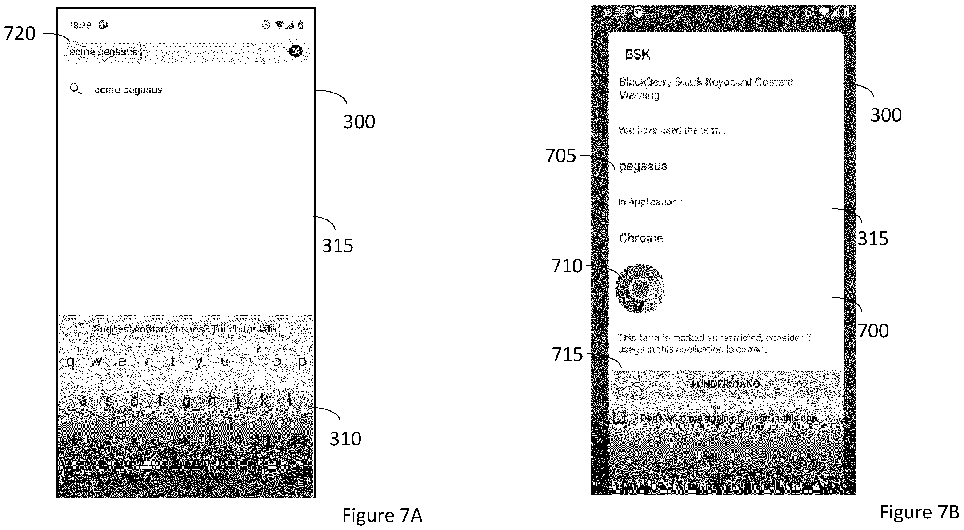

Figures 6 and 7 demonstrate use case examples of how effective the present teaching usage of the keyboard controller as a common interface to applications that are executing on the device can be. In the example of Figure 6, the user is using the keyboard 310 to continue writing the message that was previously described with reference to Figure 3. The user enters the additional words "project pegasus" into the message entry field 320. It will be recalled from the user interface example of Figure 5 that these words are defined as restricted words. Having parsed the input words during their processing within the keyboard controller, the risk engine identifies that they are conflicting with the defined policy and triggers a warning to the user, that warning being defined within the action box 530 of Figure 5. An overlay screen 600 is rendered over the messaging application graphical user interface and identifies both the problematic term "pegasus" 605 and the type of application being used to enter that word - the messaging application 610. It will be appreciated that having triggered this warning action, that this can then be stored as part of an audit log of user usage of the device. The user is prompted to reconsider the usage of the term, and can then decide - per this policy- to continue usage by pressing the "I understand" icon- box 615. Having confirmed intent the keyboard controller will then return the user to the interface of the messaging application- per Figure 6A.

Given that the keyboard controller provides a common interface to multiple applications, the same policy sequence applies automatically to different applications without further configurations updates. Advantageously the use of the keyboard as a common user input function to the computing devices ensures that characters that are input to any application that requires use of the keyboard will automatically undergo the same risk engine processing. For example, in Figure 7A, the user is using a keyboard 310 to access a browser application that is executing on the device. The browser has a user input window 720 within which the characters "acme Pegasus" as input through the keyboard are rendered. The risk engine having identified that these words conflict with the policy identified in Figure 5, generates an overlay screen 700 over the browser application graphical user interface and identifies both the problematic term "pegasus" 705 and the type of application being used to enter that word - the messaging application 710. Similarly to Figure 7A, the user is prompted to reconsider the usage of the term, and can then decide - per this policy- to continue usage by pressing the "I understand" icon- box 715. Having confirmed intent the keyboard controller will then return the user to the interface of the messaging application- per Figure 7A.

It will be appreciated that this usage of the integration of the risk engine functionality within the keyboard provides a technically efficient and secure manner with which to deploy risk engine functionality within a computing device. The common application of the keyboard which is used to access multiple different applications of different manufacturing origin and type enables bespoke policies and configurations settings to be applied across extended usage of the device- irrespective of the application being currently executed on the computing device. As the keyboard is activated at launch of the device, it is consistently operating in the background and provides a common layer to usage of the device. This common layer ensures that security of the device is easier to manage than dedicated security applications that can be deactivated or simply not turned on. The functionality of a device without a keyboard is so significantly compromised that devices - particularly mobile telecommunications devices- require operation of a keyboard for any operation of the device.

Given that the keyboard is also the generic input unit to the computing device, the present inventor has also identified that the risk engine can be used to track user usage of a particular device. This can be particularly advantageous in the context of authentication determination. It will be appreciated that usage of a device becomes highly personal. Different people develop habits of using their device at different times and in different way. This, if logged or monitored over an extended period, can be used to create user usage patterns which are quite specific to any one user. In addition to the above examples of proactively using the risk engine to monitor for nefarious applications or malware executing on a device, or to prevent inadvertent usage of a particular words or phrases- the present inventor has realised that using the information entered in different applications, for example combinations of actual text entered, which application 120 is entered into, time, context of which part of application is used, that it is possible to profile a user. This profile of the user can then be used to develop authentication profiles to determine if current usage meets profiled usage. In the event that it does not the risk engine can be used to trigger warnings or other actions - such as device shut down- if there is an identified discrepancy in usage.

The risk engine can also be configured to define actions dependent on the nature of the application with which the keyboard is currently interacting. For example, if the application is identified as being a personal messaging application a higher threshold of risk may be identified than if the application is an enterprise messaging application. As such the actioned threat notification may differ irrespective of the fact that the entered characters are the same.

Whilst the present teaching has been exemplified with reference to implementation within a mobile computing devices, example embodiments of the present application are not limited to any particular operating system, system architecture, mobile device architecture, server architecture, or computer programming language.

It will be understood that the applications, modules, routines, processes, threads, or other software components implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A keyboard controller (140) configured to be executed on a computing device (100) having at least one other application (120, 610, 710) executing thereon, the controller comprising:
an input interface to receive signals input using keys of a keyboard (310),
a processing component configured to translate the received signals into one or more characters, and
an output interface configured to relay the one or more characters to the at least one other application (120, 610, 710),
wherein the keyboard controller further comprises an integrated risk engine (230) in communication with each of the processing component and the output interface, the risk engine being configured to monitor usage of the computing device and to action a security response output of the keyboard controller in response to identifying one or more security risks, and **characterized in that** the integrated risk engine is configured to effect a risk analysis of current operation of the device to identify malware or other identifiable nefarious activity on the device.

2. The controller of claim 1 wherein the integrated risk engine is configured to effect a processing of the one or more characters to identify the one more security risks.

3. The controller of claim 2 wherein the processing of the one or more characters is effected on a word identification basis.

4. The controller of claim 2 or 3 wherein the processing of the one or more characters is effected on a plurality of word identification basis.

5. The controller of any preceding claim wherein the security response output is a generation of a rendered message on a user interface of the device.

6. The controller of any preceding claim wherein the security response output is a blocking of the relay of the one or more characters from the keyboard controller to the one or more applications operating on the device.

7. The controller of any preceding claim wherein the integrated risk engine is configured using one or more policy configuration criteria.

8. The controller of claim 7 wherein the one or more policy configuration criteria are managed by a remote server, the controller being configured to be periodically updated through communication with the remote server.

9. The controller of any preceding claim wherein the controller is configured to effect a storage of user interaction with the device through usage of the controller.

10. The controller of claim 9 wherein the controller is configured to monitor a user interaction with the device through usage of the controller to generate a user profile for that user.

11. The controller of claim 10 wherein the monitored usage of the computing device comprises comparing current usage with the generated user profile.

12. The controller of any preceding claim wherein the controller is a software application executable on a computing device having a touch screen (315) interface, the controller being configured to effect generation of a virtual keyboard (310) on the touch screen interface and the input interface being configured to receive signals input using keys of the virtual keyboard.

13. The controller of claim 11 wherein the security response output is a displayed message within the virtual keyboard on the touch screen interface.

14. The controller of any preceding claim wherein the receipt of signals effects a triggering of the risk engine initiating the monitored usage of the computing device.

15. The controller of any preceding claim configured such that the risk engine is operatively provided in a direct data path between received signals input from a keyboard and an intended destination application executing on the device.

16. A computing device (100) includes a processor (115); a memory (110); at least one application stored in the memory and executable by the processor of the computing device, the device further including a keyboard controller as claimed in any preceding claim.

## Patentansprüche

1. Eine Tastatursteuervorrichtung (140), die dazu konfiguriert ist, auf einer Rechenvorrichtung (100) mit wenigstens einer anderen Anwendung (120, 610, 710), die darauf ausgeführt wird, ausgeführt zu werden, wobei die Steuervorrichtung Folgendes beinhaltet:
eine Eingabeschnittstelle zum Empfangen von Signalen, die über Tasten einer Tastatur (310) eingegeben werden,
eine Verarbeitungskomponente, die dazu konfiguriert ist, die empfangenen Signale in ein oder mehrere Zeichen zu übersetzen, und
eine Ausgabeschnittstelle, die dazu konfiguriert ist, das eine oder die mehreren Zeichen an die wenigstens eine andere Anwendung (120, 610, 710) weiterzuleiten,
wobei die Tastatursteuervorrichtung ferner eine integrierte Risiko-Engine (230) beinhaltet, die sowohl mit der Verarbeitungskomponente als auch mit der Ausgabeschnittstelle kommuniziert, wobei die Risiko-Engine dazu konfiguriert ist, die Verwendung der Rechenvorrichtung zu überwachen und als Reaktion auf die Identifizierung eines oder mehrerer Sicherheitsrisiken eine
Sicherheitsreaktionsausgabe der Tastatursteuervorrichtung auszulösen, und **dadurch gekennzeichnet, dass**
die integrierte Risiko-Engine dazu konfiguriert ist, eine Risikoanalyse des aktuellen Betriebs der Vorrichtung zu bewirken, um Malware oder andere identifizierbare schändliche Aktivitäten auf der Vorrichtung zu identifizieren.

2. Steuervorrichtung gemäß Anspruch 1, wobei die integrierte Risiko-Engine dazu konfiguriert ist, eine Verarbeitung des einen oder der mehreren Zeichen zu bewirken, um das eine oder die mehreren Sicherheitsrisiken zu identifizieren.

3. Steuervorrichtung gemäß Anspruch 2, wobei die Verarbeitung des einen oder der mehreren Zeichen auf Grundlage einer Wortidentifizierung bewirkt wird.

4. Steuervorrichtung gemäß Anspruch 2 oder 3, wobei die Verarbeitung des einen oder der mehreren Zeichen auf Grundlage einer Vielzahl von Wortidentifizierungen bewirkt wird.

5. Steuervorrichtung gemäß einem der vorhergehenden Ansprüche, wobei die Ausgabe der Sicherheitsreaktion die Erzeugung einer gerenderten Nachricht auf einer Benutzeroberfläche der Vorrichtung ist.

6. Steuervorrichtung gemäß einem der vorhergehenden Ansprüche, wobei die Sicherheitsreaktionsausgabe eine Blockierung der Weitergabe des einen oder der mehreren Zeichen von der Tastatursteuervorrichtung an die eine oder die mehreren auf der Vorrichtungen arbeitenden Anwendungen ist.

7. Steuervorrichtung gemäß einem der vorhergehenden Ansprüche, wobei die integrierte Risiko-Engine unter Verwendung eines oder mehrerer Kriterien für die Richtlinienkonfiguration konfiguriert wird.

8. Steuervorrichtung gemäß Anspruch 7, wobei das eine oder die mehreren Kriterien für die Richtlinienkonfiguration von einem entfernten Server verwaltet werden, wobei die Steuervorrichtung dazu konfiguriert ist, durch Kommunikation mit dem entfernten Server periodisch aktualisiert zu werden.

9. Steuervorrichtung gemäß einem der vorhergehenden Ansprüche, wobei die Steuervorrichtung dazu konfiguriert ist, eine Speicherung der Benutzerinteraktion mit der Vorrichtung durch Verwendung der Steuervorrichtung zu bewirken.

10. Steuervorrichtung gemäß Anspruch 9, wobei die Steuervorrichtung dazu konfiguriert ist, eine Benutzerinteraktion mit der Vorrichtung durch die Verwendung der Steuervorrichtung zu überwachen, um ein Benutzerprofil für diesen Benutzer zu erzeugen.

11. Steuervorrichtung gemäß Anspruch 10, wobei die überwachte Verwendung der Rechenvorrichtung das Vergleichen der aktuellen Verwendung mit dem erzeugten Benutzerprofil beinhaltet.

12. Steuervorrichtung gemäß einem der vorhergehenden Ansprüche, wobei die Steuervorrichtung eine Softwareanwendung ist, die auf einer Rechenvorrichtung mit einer Schnittstelle mit einem berührungsempfindlichen Bildschirm (315) ausgeführt werden kann, wobei die Steuervorrichtung dazu konfiguriert ist, die Erzeugung einer virtuellen Tastatur (310) auf der Schnittstelle mit einem berührungsempfindlichen Bildschirm zu bewirken, und die Eingabeschnittstelle dazu konfiguriert ist, Signale zu empfangen, die unter Verwendung der Tasten der virtuellen Tastatur eingegeben werden.

13. Steuervorrichtung gemäß Anspruch 11, wobei die Sicherheitsreaktionsausgabe eine auf der virtuellen Tastatur der Schnittstelle mit berührungsempfindlichem Bildschirm angezeigte Meldung ist.

14. Steuervorrichtung gemäß einem der vorhergehenden Ansprüche, wobei der Empfang von Signalen ein Auslösen der Risiko-Engine bewirkt, die die überwachte Verwendung der Rechenvorrichtung initiiert.

15. Steuervorrichtung gemäß einem der vorhergehenden Ansprüche, die derart konfiguriert ist, dass die Risiko-Engine in einem direkten Datenpfad zwischen empfangenen Signalen, die von einer Tastatur eingegeben werden, und einer beabsichtigten Zielanwendung, die auf der Vorrichtung ausgeführt wird, betriebsfähig bereitgestellt wird.

16. Eine Rechenvorrichtung (100) umfasst einen Prozessor (115); einen Speicher (110); wenigstens eine Anwendung, die in dem Speicher gespeichert und durch den Prozessor der Rechenvorrichtung ausführbar ist, wobei die Vorrichtung ferner eine Tastatursteuervorrichtung gemäß einem der vorhergehenden Ansprüche umfasst.

## Revendications

1. Un contrôleur de clavier (140) configuré pour être exécuté sur un dispositif informatique (100) ayant au moins une autre application (120, 610, 710) s'exécutant sur celui-ci, le contrôleur comprenant :
une interface d'entrée pour recevoir des signaux entrés à l'aide de touches d'un clavier (310),
un composant de traitement configuré pour traduire les signaux reçus en un ou plusieurs caractères, et
une interface de sortie configurée pour relayer les un ou plusieurs caractères à l'au moins une autre application (120, 610, 710),
le contrôleur de clavier comprenant en outre un moteur de risque intégré (230) en communication avec chaque élément parmi le composant de traitement et l'interface de sortie, le moteur de risque étant configuré pour surveiller l'utilisation du dispositif informatique et pour actionner une sortie de réponse de sécurité du contrôleur de clavier en réponse à l'indentification d'un ou de plusieurs risques de sécurité, et
**caractérisé en ce que**
le moteur de risque intégré est configuré pour effectuer une analyse de risque du fonctionnement actuel du dispositif afin d'identifier un logiciel malveillant ou autre activité néfaste identifiable sur le dispositif.

2. Le contrôleur de la revendication 1 dans lequel le moteur de risque intégré est configuré pour effectuer un traitement des un ou plusieurs caractères afin d'identifier les un ou plusieurs risques de sécurité.

3. Le contrôleur de la revendication 2 dans lequel le traitement des un ou plusieurs caractères est effectué sur une base d'identification de mot.

4. Le contrôleur de la revendication 2 ou de la revendication 3 dans lequel le traitement des un ou plusieurs caractères est effectué sur une base d'identification d'une pluralité de mots.

5. Le contrôleur de n'importe quelle revendication précédente dans lequel la sortie de réponse de sécurité est une génération d'un message restitué sur une interface utilisateur du dispositif.

6. Le contrôleur de n'importe quelle revendication précédente dans lequel la sortie de réponse de sécurité est un blocage du relais des un ou plusieurs caractères du contrôleur de clavier vers les une ou plusieurs applications fonctionnant sur le dispositif.

7. Le contrôleur de n'importe quelle revendication précédente dans lequel le moteur de risque intégré est configuré à l'aide d'un ou de plusieurs critères de configuration de politique.

8. Le contrôleur de la revendication 7 dans lequel les un ou plusieurs critères de configuration de politique sont gérés par un serveur à distance, le contrôleur étant configuré pour être périodiquement mis à jour par le biais de sa communication avec le serveur à distance.

9. Le contrôleur de n'importe quelle revendication précédente, le contrôleur étant configuré pour effectuer un stockage d'interaction d'utilisateur par le biais d'une utilisation du contrôleur.

10. Le contrôleur de la revendication 9, le contrôleur étant configuré pour surveiller une interaction d'utilisateur avec le dispositif par le biais d'une utilisation du contrôleur afin de générer un profil d'utilisateur pour cet utilisateur.

11. Le contrôleur de la revendication 10 dans lequel l'utilisation surveillée du dispositif informatique comprend la comparaison de l'usage actuel avec le profil d'utilisateur généré.

12. Le contrôleur de n'importe quelle revendication précédente, le contrôleur étant une application logicielle exécutable sur un dispositif informatique ayant une interface d'écran tactile (315), le contrôleur étant configuré pour effectuer la génération d'un clavier virtuel (310) sur l'interface d'écran tactile et l'interface d'entrée étant configurée pour recevoir des signaux entrés à l'aide de touches du clavier virtuel.

13. Le contrôleur de la revendication 11 dans lequel la sortie de réponse de sécurité est un message affiché au sein du clavier virtuel sur l'interface d'écran tactile.

14. Le contrôleur de n'importe quelle revendication précédente dans lequel la réception des signaux effectue un déclenchement du moteur de risque lançant l'utilisation surveillée du dispositif informatique.

15. Le contrôleur de n'importe quelle revendication précédente configuré de telle sorte que le moteur de risque soit fonctionnellement fourni dans un chemin de données direct entre les signaux reçus entrés à partir d'un clavier et une application de destination voulue s'exécutant sur le dispositif.

16. Un dispositif informatique (100) incluant un processeur (115) ; une mémoire (110) ; au moins une application stockée dans la mémoire et exécutable par le processeur du dispositif informatique, le dispositif incluant en outre un contrôleur de clavier tel que revendiqué dans n'importe quelle revendication précédente.
